# EUROPEAN PATENT SPECIFICATION

(11) **EP 0 444 575 B1**
(45) Date of publication and mention of the grant of the patent: **14.12.1994**
(21) Application number: 91102738.1
(22) Date of filing: 25.02.1991
(51) Int. Cl.: G01L 3/10

(54) **Shielded magnetoelastic torque transducer**
Abgeschirmter magnetoelastischer Drehmomentwandler
Transducteur de moment de torsion magneto-élastique blindé

(30) Priority: 28.02.1990 SE 9000716
(43) Date of publication of application: 04.09.1991
(73) Proprietor: ASEA BROWN BOVERI AB, 721 83 Västeras (SE)
(72) Inventor: Aminder, Christer, S-723 48 Västeras (SE); Sobel, Jarl R., S-722 26 Västeras (SE)
(74) Representative: Boecker, Joachim, Dr.-Ing.

(56) References cited:
- DE-U- 8 903 560

## Description

The invention relates to a shielded magnetoelastic torque transducer according to the precharacterising part of claim 1. Shielding is provided against static or quasistatic magnetic fields axially extending in the shaft between the driving source and the driven load.

As is well known, magnetoelastic transducers are based on the measurement of the permeability change which takes place in a ferromagnetic material when subjected to mechanical stress. The measuring principles and configuration of these transducers are well known and described in a plurality of publications and patent specifications, inter alia in EP-A-89,916, US-A-4,506,554 and SE-A-8,904,307-9, the latter corresponding to EP-A-90,195,168.6. Briefly, it may be stated that a magnetoelastic torque transducer comprises a transducer shaft and a stationary casing comprising a magnetic core as well as excitation and measuring windings attached to said core. A detailed description thereof need not be given here.

Regardless of which method is used to measure the permeability changes, the magnetic hysteresis curve, that is, the flux-density-versa-magnetic-field-strength-curve (B-H curve), traversed by each point in the material during a cycle of the magnetization, will be changed when the material is, in addition, magnetized by a static field. This, of course, influences the measurement and leads to changes of the measured signal in case of an unloaded transducer, that is the zero signal, and of the sensitivity of the transducer to the influence of forces.

If the transducer is so heavily magnetized by a static field that the ferromagnetic material approaches saturation, the differential permeability as well as the sensitivity of the transducer will be very low. However, the detrimental influence is also present in connection with considerably lower field strengths.

To reduce the effect of external static fields, attempts have been made to shield off such fields. However, this has proved to be a difficult technical problem. The traditional method is to surround the transducer with a magnetic shield made of highly magnetically permeable material, for example of mu-metal (see e.g. published utility model DE-U- 8 903 560). However, such a design mainly serves as a shield against magnetic fields in the air which are directed across the transducer shaft.

However, according to the above, a torque transducer forms a link in a torque transmission between a driving source and a load. A remanent axial magnetic field in some of the parts in this transmission may then be conducted directly into the transducer shaft without being diverted by the external shield.

The problem with static external magnetization may become particularly serious since static magnetization, by remanence in the transducer material, may also give rise to permanent changes in the operation of the transducer.

The above-mentioned SE-A-8,904,307-9 discloses an electrical method of minimizing the effect of an external static or quasi-static magnetic field. The method is based on the fact that an external magnetic field causes the measured signal to comprise even harmonics, together with the odd harmonics of the fundamental wave of the magnetization. The magnitude of the even harmonics is a measure of the magnitude of the external magnetic field. By measuring the even harmonics and using this as an input signal to a regulator, the external magnetization may be reduced to zero with the aid of direct current in some suitable winding.

The transducer shaft of magnetic material constitutes part of the magnetic shaft which connects the driving source to the driven load. If in some way a magnetic flux with a component in the longitudinal direction of the shaft may enter the shaft, this flux will therefore also pass through the transducer shaft and is able to influence the torque measurement in the manner described. As explained above, a shield surrounding the transducer will not be able to divert this magnetic flux in the shaft from the transducer.

The invention aims at developing a shielded magnetoelastic torque transducer of the above-mentioned kind which is capable to shield off external magnetic fields that extend in the longitudinal direction within the shafts connected to the torque transducer.

To achieve this aim the invention suggests a shielded magnetoelastic torque transducer according to the introductory part of claim 1, which is characterized by the features of the characterizing part of claim 1.

Further developments of the invention are characterized by the features of the additional claims.

According to the invention the driving shaft between the driving source and the load is divided in such a way that the part between the driving source and the transducer shaft and part between the transducer shaft and the load, respectively, are made of non-magnetic material. By providing the transducer and the transducer shaft, including the non-magnetic shaft parts, with an external magnetic shield with flanges so that there will be a very small air gap between the flanges of the shield and the periphery of the non-magnetic shaft parts, an axial magnetic flux will be conducted past the transducer through the external magnetic shield.

By way of example, the invention will now be described in greater detail with reference to the accompanying drawings showing in
- Figure 1: the application of a shield around a magnetoelastic torque transducer according to the state of the art,
- Figure 2: a torque transducer according to the invention, protected against an external static or quasistatic magnetic field.

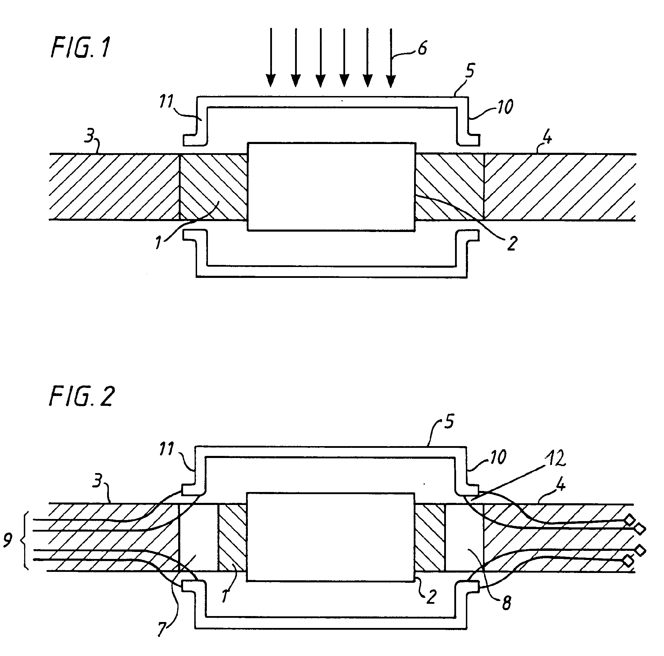

Figure 1 shows an example of the state of the art such as detailed in DE-U- 8 903 560 for protecting a torque transducer against an external magnetic field 6 present in the ambient space and directed perpendicular to the transducer shaft. The transducer shaft 1 is surrounded by a stationary casing 2 of the transducer which houses the windings etc. Welded or otherwise fixed to one end of the transducer shaft is a first shaft part 3 towards a driving source, and, in similar manner, fixed to the other end of the transducer shaft is a second shaft part 4 towards the driven load. A soft-magnetic shield 5 then protects the transducer against the external magnetic field 6 directed perpendicular to the transducer shaft.

A preferred embodiment according to the invention for shielding the transducer from an axial magnetic field 9 extending within the shaft between the driving source and the load is shown in Figure 2. In the same way as in Figure 1 and with the same reference numerals, Figure 2 shows a transducer shaft, a casing 2, shaft parts 3 and 4 towards the driving source and towards the driven load, respectively, and a surrounding magnetic shield 5. Specific to the invention, as described above is that between the transducer shaft and the previously mentioned first shaft part 3 towards the driving source and between the transducer shaft and the previously mentioned second shaft part 4 towards the driven load, respectively, a third shaft part 7 and a fourth shaft part 8, respectively, of non-magnetic material are inserted. A consequence of this is that any magnetic flux extending in the shaft and represented by the lines 9, as regards the transducer region, pass through the surrounding magnetic shield 5 provided with flanges 10 and 11 formed such that the air gaps between these flanges and the periphery of the shaft are as small as possible. Thus the external magnetic flux cannot influence the torque measurement.

In Figure 2 the flanges 10, 11 are located opposite the shaft parts 7, 8 of non-magnetic material. The effect of the short-circuiting function of the shield 5 with its flanges may be further increased by locating the flanges such that they face portions of the shaft parts 3 and 4, respectively, of magnetic material.

## Claims

1. Magnetoelastic torque transducer shielded against static or quasi-static external magnetic fields, with a stationary casing (2), which houses a magnetic core with excitation and measuring windings and a transducer shaft (1), with a first shaft part (3) between said transducer shaft and a driving source, and with a second shaft part (4) between said transducer shaft and a driven load, said casing and shaft being surrounded by a magnetic shield of soft-magnetic material formed with flanges (10, 11) which extend towards the shaft **characterized** in that between the transducer shaft and the first shaft part (3) there is attached a third shaft part (7) of non-magnetic material, that between the transducer shaft and the second shaft part (4) there is attached a fourth shaft part (8) of non-magnetic material, and that the casing (2), the transducer shaft and the non-magnetic shaft parts (7,8) are surrounded by said magnetic shield (5).

2. Shielded magnetoelastic torque transducer according to claim 1, **characterized** in that the air gaps (12) formed between the shield flanges (10,11) and the shaft are as small as possible.

3. Shielded magnetoelastic torque transducer according to claim 1 or 2, **characterized** in that the shield (5) and/or its flanges (10, 11) are formed and dimensioned such that the air gaps (12) are formed between said flanges and the shaft parts (7,8) of non-magnetic material.

4. Shielded magnetoelastic torque transducer according to claim 1 or 2, **characterized** in that the shield (5) and/or its flanges (10, 11) are formed and dimensioned such that the air gaps (12) are formed between said flanges (10, 11) and the first shaft part (3) between the shaft parts (7) of non-magnetic material and the driving source, and the second shaft part (4) between the shaft parts (8) of non-magnetic material and the load, respectively.

## Patentansprüche

1. Magneto-elastischer Drehmomentengeber, der gegen statische oder quasistatische äußere magnetische Felder abgeschirmt ist, mit einem stationären Gehäuse (2), in welchem ein magnetischer Kern mit Erreger- und Meßwicklungen und eine Geberwelle (1) untergebracht sind, mit einem ersten Wellenabschnitt (3) zwischen der genannten Geberwelle und einer Antriebsquelle und mit einem zweiten Wellenabschnitt (4) zwischen der genannnten Geberwelle und einer angetriebenen Last, wobei das genannte Gehäuse und die Welle von einem magnetischen Schild aus weich-magnetischem Material umgeben ist, welches mit Flanschen (10,11) versehen ist, die sich zu der Welle erstrecken, **dadurch gekennzeichnet**, daß zwischen der Geberwelle und dem ersten Wellenabschnitt (3) ein dritter Wellenabschnitt (7) aus nicht-magnetischem Material eingefügt ist, daß zwischen der Geberwelle und dem zweiten Wellenabschnitt (4) ein vierter Wellenabschnitt (8) aus nicht-magnetischem Material eingefügt ist und daß das Gehäuse (2), die Geberwelle und die aus nicht-magnetischem Material bestehenden Wellenabschnitten (7,8) von dem genannten magnetischen Schild (5) umgeben sind.

2. Abgeschirmter magneto-elastischer Drehmomentengeber nach Anspruch 1, **dadurch gekennzeichnet**, daß die Luftspalte (12) zwischen den Flanschen (10,11) des Schildes und der Welle so klein wie möglich sind.

3. Abgeschirmter magneto-elastischer Drehmomentengeber nach Anspruch 1 oder 2, **dadurch gekennzeichnet**, daß der Schild (5) und/oder seine Flansche (10,11) derart geformt und bemessen sind, daß die Luftspalte (12) zwischen den genannten Flanschen und den Wellenabschnitten (7,8) aus nicht-magnetischem Material liegen.

4. Abgeschirmter magneto-elastischer Drehmomentengeber nach Anspruch 1 oder 2, **dadurch gekennzeichnet**, daß der Schild (5) und/oder seine Flansche (10,11) derart geformt und bemessen sind, daß die Luftspalte (12) vorhanden sind zwischen den genannten Flanschen (10,11) und dem ersten Wellenabschnitt (3), der zwischen dem Wellenabschnitt (7) aus nicht-magnetischem Material und der Antriebsquelle liegt, beziehungsweise dem zweiten Wellenabschnitt (4), der zwischen dem Wellenabschnitt (8) aus nicht-magnetischem Material und der Last liegt.

## Revendications

1. Transducteur de couple magnétoélastique blindé vis-à-vis de champs magnétiques externes statiques ou quasi-statiques, comportant un carter fixe (2) qui contient un circuit magnétique avec des enroulements d'excitation et de mesure et un arbre de transducteur (1), avec une première partie d'arbre (3) entre l'arbre de transducteur et une source d'entraînement, et avec une seconde partie d'arbre (4) entre l'arbre de transducteur et une charge entraînée, le carter et l'arbre étant entourés par un blindage magnétique en un matériau magnétique doux qui comporte des flasques (10, 11) s'étendant vers l'arbre, **caractérisé** en ce qu'une troisième partie d'arbre (7) en un matériau non magnétique est montée entre l'arbre de transducteur et la première partie d'arbre (3), en ce qu'une quatrième partie d'arbre (8) en un matériau non magnétique est montée entre l'arbre de transducteur et la seconde partie d'arbre (4), et en ce que le carter (2), l'arbre de transducteur et les parties d'arbre non magnétiques (7, 8) sont entourés par le blindage magnétique (5).

2. Transducteur de couple magnétoélastique blindé selon la revendication 1, **caractérisé** en ce que les entrefers (12) qui sont formés entre les flasques du blindage (10, 11) et l'arbre sont aussi petits que possible.

3. Transducteur de couple magnétoélastique blindé selon la revendication 1 ou 2, **caractérisé** en ce que le blindage (5) et/ses flasques (10, 11) sont formés et dimensionnés de façon que les entrefers (12) soient formés entre les flasques et les parties d'arbre (7, 8) en matériau non magnétique (4).

4. Transducteur de couple magnétoélastique blindé selon la revendication 1 ou 2, **caractérisé** en ce que le blindage (5) et/ou ses flasques (10, 11) sont formés et dimensionnés de façon que les entrefers (12) soient respectivement formés entre les flasques (10, 11) et la première partie d'arbre (3) qui s'étend entre les parties d'arbre (7) en matériau non magnétique et la source d'entraînement, et la seconde partie d'arbre (4) qui s'étend entre les parties d'arbre (8) en matériau non magnétique et la charge.
